# EUROPEAN PATENT APPLICATION

(11) **EP 3 808 640 A1**
(43) Date of publication of application: **21.04.2021**
(21) Application number: 20201878.4
(22) Date of filing: 14.10.2020
(51) Int. Cl.: B62J 1/00, B62J 1/10

(54) **SADDLE FOR A BICYCLE**

(30) Priority: 14.10.2019 GB 201914834
(71) Applicant: Halfords Limited, Redditch, Worcestershire B98 0DE (GB)
(72) Inventor: STEVENSON, Justin Richard, Loughborough, Leicestershire LE12 9TQ (GB)
(74) Representative: HGF

(57) **Abstract**

There is provided a saddle for a bicycle. The saddle comprises a body, and first and second seat portions attached to the body and moveable relative to one another and the body. The saddle further comprises first and second clamp surfaces, at least one of the first and second clamp surfaces being movable relative to the other and the body. Respective limbs extend from the seat portions, and each of the limbs comprise a portion extending between the first and second clamp surfaces that is clampable therebetween to secure selectively the first and second seat portions a plurality of positions relative to one another and the body. The saddle may allow a cyclist to personalise the saddle to support them optimally, or at least comfortably.

## Description

### TECHNICAL FIELD

The invention relates to a saddle for a bicycle. More particularly, the invention relates to an adjustable saddle for a bicycle that allows a cyclist to personalise the saddle to support them optimally, or at least comfortably.

### BACKGROUND

Saddles for bicycles may exert pressure upon sensitive areas of the groin, particularly the perineal area, which includes soft tissues, blood vessels and nerves. Pressure placed upon the perineum may reduce blood flow, causing numbness and pain. Saddle manufactures have responded by producing saddles that are intended to improve blood flow through affected arteries, in particular the pudendal arteries, which supply many of the muscles and organs of the pelvic cavity. Saddles are available that comprise selectively removed portions, often referred to as relief channels, elongated holes extending therethrough and/or gel cushions arranged to distribute pressure placed upon the perineal area. However, an important factor in reducing the intensity of perineal distress suffered by a cyclist is appropriate selection of the width of the saddle. Yet, despite this, most saddles provide only a fixed width, so cannot accommodate optimally anatomical variation between cyclists, such as differences in the distances between the ischial tuberosities, often referred to as the sit bones, and the ischiopubic rami. In particular, the distance between ischial tuberosities should be considered when selecting a saddle; one width will not fit all, not least because women will tend to have greater separation of the ischial tuberosities than men. At the top end of the cycle market, this problem may be addressed as part of a bike fit, e.g. by saddle pressure mapping, to match optimally a saddle to a cyclist. However, such careful selection of a saddle is uncommon at the lower end of the cycle market, and many cyclists may be unsure as to the most appropriate saddle to purchase. Several purchases may even be necessary for a cyclist to determine the optimal saddle. Accordingly, there is a need for a saddle that allows a cyclist to personalise the saddle to support them optimally, or at least comfortably. Moreover, it is desirable that such personalisation be simple and fast for the cyclist to effect.

It is an object of embodiments of the invention to at least mitigate one or more problems associated with known arrangements.

### SUMMARY OF THE INVENTION

According to an aspect of the invention, there is provided a saddle for a bicycle, the saddle comprising: a body; first and second seat portions attached to the body and moveable relative to one another and the body; first and second clamp surfaces, at least one of the first and second clamp surfaces being movable relative to the other and the body; and a respective limb extending from each of the first and second seat portions, each of the limbs comprising a first portion extending between the first and second clamp surfaces and being clampable therebetween to secure selectively the first and second seat portions in a plurality of positions relative to one another and the body. The arrangement may allow a cyclist to personalise the saddle to support them optimally, or at least comfortably. In doing so, the cyclist may select a width of the saddle that limits the amount of pressure placed upon sensitive areas of the groin.

In certain embodiments, the limbs may extend from the seat portions in overlapping relation with one another such that the first portion of the limb extending from the first seat portion is closer to the second seat portion than to the first seat portion, and vice versa. Additionally, or alternatively, each of the limbs may comprise a second portion spaced apart from the first portion extending between the first and second clamp surfaces and clampable therebetween to secure selectively the first and second seat portions in the plurality of positions relative to one another and the body. The limbs may extend in overlapping relation with one another such that the first portion of the limb extending from the first seat portion is disposed between the first and second portions of the limb extending from second seat portion, and vice versa. Optionally, the limb extending from the first seat portion may abut or rest atop the first portion of the limb extending from the second seat portion, and vice versa.

In certain embodiments, the saddle may comprises a single clamp member extending through the first and second clamp surfaces and configured for drawing selectively at least one of the first and second clamp surfaces toward the other to effect clamping of the first portions, or the first portions and the second portions, therebetween. The arrangement may allow personalisation of the saddle to be simple and fast for the cyclist to effect. The single clamp member may extend through each of the first and second clamp surfaces and through a void disposed between the first portions. Optionally, the saddle may comprise a quick-release lever configured to act with the single clamp member for drawing selectively at least one of the first and second clamp surfaces toward the other to effect clamping of the first portion, or the first portions and the second portions, therebetween.

At least one of the first and second clamp surfaces may comprise spaced apart grooves or serrations extending therealong and engageable with the first portions, or the first portions and the second portions. This arrangement may facilitate clamping of the first portions, or the first portions and the second portions, between the first and second clamp surfaces. Each of the first portions, or each of the first portions and the second portions, may comprise one or more surfaces complementary to and engageable with the spaced apart grooves or serrations of the at least one of the first and second clamp surfaces. This arrangement may allow the first portions, or the first portions and the second portions, to be indexed, i.e. moved between the plurality of positions.

In certain embodiments, at least one of the first and second clamp surfaces may be inclined relative to one another. Moreover, each of the first portions, or each of the first portions and the second portions, may comprise a geometry complementary to the first and second clamp surfaces. The geometry of the each of the first portions, or each of the first portions and the second portions, may be at least substantially trapezoidal. The arrangement may facilitate the clamping of the first portions, or the first portions and the second portions, between the first and second clamp surfaces. In particular, the arrangement may help to improve clamping efficacy, inhibiting rattling and/or undesirable movement of the of the first and second seat portions relative to the body. Moreover, each of the first portions, or each of the first portions and the second portions, may abut or rest atop the body and be clampable between the first and second clamp surfaces and the body to secure selectively the first and second seat portions in the one of the plurality of positions relative to one another and the body. The arrangement may further improve clamping efficacy.

Optionally, the saddle may comprise a biasing member configured to bias at least one of the first and second clamp surfaces toward the other. Biasing of the first and second clamp surfaces toward one another may help to index the first and second seat portions. The biasing member may be a helical compression spring through which the single clamp member extends.

In certain embodiments, the first and second seat portions may be attached pivotably to the body at or near a front end or a nose of the saddle. The first and second seat portions may be attached pivotably to the body by a common pivot. Additionally, or alternatively, the first and second clamp surfaces may be at least substantially arcuate surfaces. In certain embodiments, the arcuate surfaces may extend in respective circumferential planes at respective radial distances from the common pivot.

The body may comprise one of the first and second clamp surfaces, i.e. one of the first and second clamp surface may be integral to the body. Additionally, or alternatively, the limbs may be integral to the first and second seat portions. Optionally, each of the first and second seat portions may comprise at least one cushioning layer. The saddle may comprise a resiliently deformable cover layer at least partially covering the first and second seat portions.

According to another aspect of the invention, there is provided a cycle, such as a bicycle or a tricycle, comprising the above-described saddle.

### BRIEF DESCRIPTION OF THE DRAWINGS

Embodiments of the invention will now be described, by way of example only, with reference to the accompanying figures, in which:
Figure 1 is a perspective view of a saddle according to an embodiment of the invention, showing the saddle in a narrow, or closed, configuration;
Figure 2 is a perspective view of the saddle shown in Figure 1, showing the saddle in a wide, or open, configuration;
Figure 3 is an exploded perspective view of the saddle shown in Figure 1, showing features of the saddle detached from one another;
Figure 4 is a perspective view of an underside of seat of the saddle shown in Figure 1 portions - other features being hidden - corresponding to the narrow, or closed, configuration;
Figure 5 is a perspective view of an underside of the seat portions of the saddle shown in Figure 1 - other features being hidden - corresponding to the wide, or open, configuration; and
Figures 6, 7 and 8 are cross-sectional views of the saddle shown in Figure 1, showing first and second portions of the seat portions disposed between first and second clamp surfaces.

### DETAILED DESCRIPTION

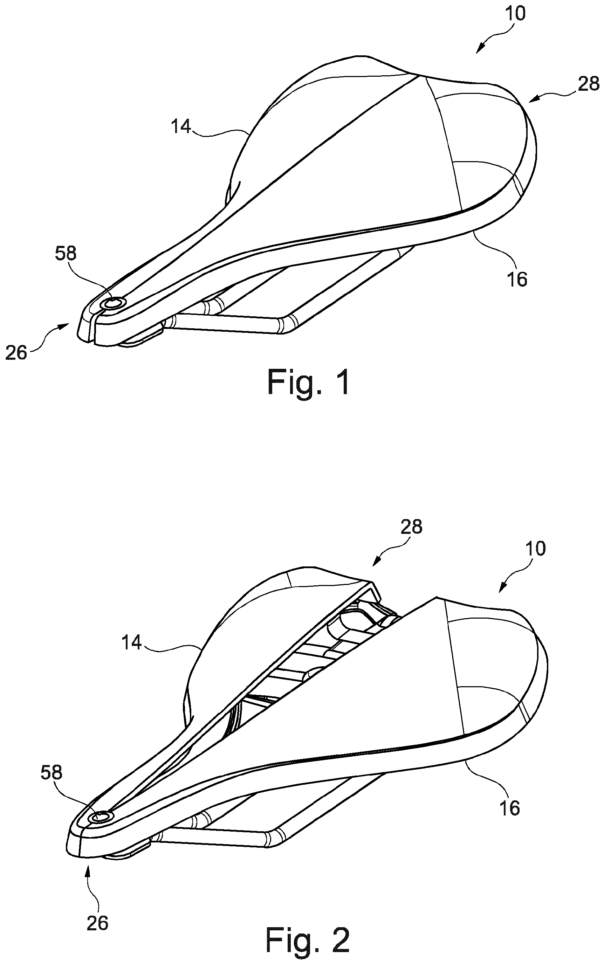

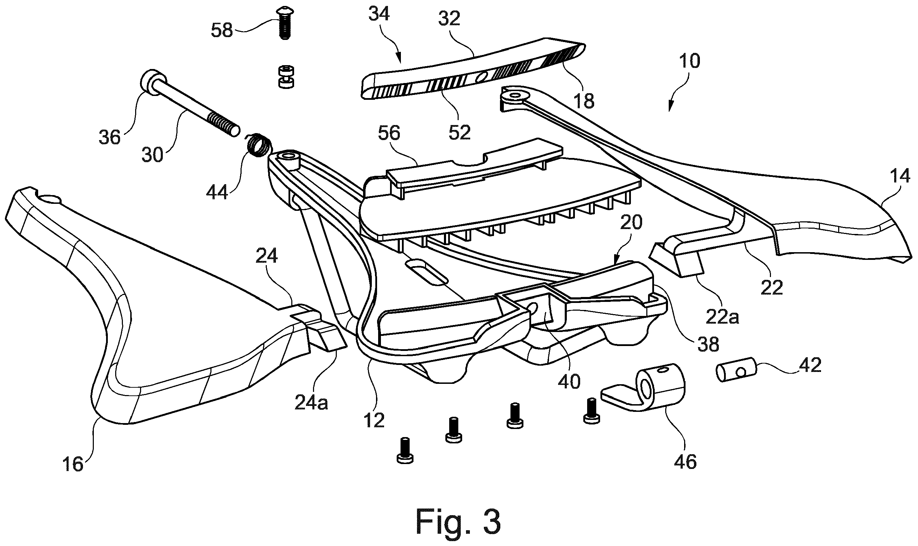

Figures 1 to 8 show a saddle 10 according to an embodiment of the invention. The saddle 10 has particular application as a cycle saddle for use with a cycle, such as a bicycle or a tricycle. Figure 1 shows the saddle 10 in a narrow, or closed, configuration. The saddle 10 comprises a body 12 (which, like other features described herein, is perhaps most clearly identifiable in Figure 3) and first and second seat portions 14, 16. The seat portions 14, 16 are moveable relative to one another and the body 12. In this manner, a distance between the first seat portion 14 and the second seat portion 16 may be varied selectively, in use, to vary selectively a width of the saddle 10. As such, the saddle 10 is an adjustable saddle, allowing a cyclist to personalise the saddle 10 to support them optimally, or at least comfortably. To this end, the saddle 10 further comprises first and second clamp surfaces 18, 20, which are described in more detail below. The saddle further comprises two limbs 22, 24 extending from the first and second seat portions 14, 16, respectively, and comprising first portions 22a, 24a, which may also be referred to as first clampable portions. The first portions 22a, 24a extend between the first clamp surface 18 and the second clamp surface 20 such that each is clampable between the clamp surfaces 18, 20. By clamping the first portions 22a, 24a of the limbs 22, 24 between the clamp surfaces 18, 20, the first and second seat portions 14, 16 may be secured selectively in a plurality of possible positions relative to one another and the body 12, thus fixing the width of the saddle 10 in one width of a plurality of possible widths.

Figure 2 shows the saddle 10 in a wide, or open, configuration. As will be understood, the wide configuration increases the distance between the first seat portion 14 and the second seat portion 16 and thus provides a greater width of the saddle 10 than the narrow configuration. At the very least, the saddle 10 provides two possible positions of the seat portions 14, 16 relative to one another and the body 12, i.e. the respective positions of the narrow and wide configurations. However, in certain embodiments, the saddle 10 may additionally provide one or more further positions, as described in more detail below.

The seat portions 14, 16 are attached or coupled to the body 12. As shown in the illustrated embodiment, the seat portions 14, 16 may be attached to the body 12 at, or near to, a nose 26 of the saddle 10. The nose 26 is a front of the saddle 10, which is opposite a rear 28 of the saddle 10. Accordingly, used herein, the terms 'forwardly' and 'forwardmost' are to be understood to mean a direction toward and being closest to the nose 26, respectively. Used herein, 'rearwardly' and 'rearmost' are to be understood to mean a direction toward and being closest to the rear 28, respectively. Also, used herein, 'upwardly' and 'downwardly' are to be understood to mean directions perpendicular to the forwardly direction and toward and away from the seat portions 14, 16, respectively.

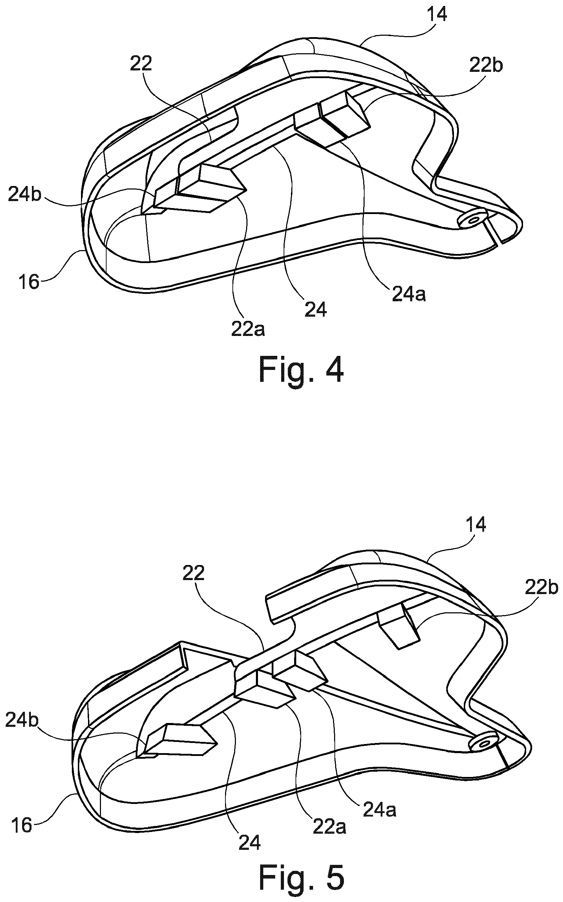

Figures 3, 4 and 5 show the manner in which the limbs 22, 24 may extend from each of the seat portions 14, 16. In the illustrated embodiment, each limb 22, 24 extends from an underside of each of the seat portions 14, 16. Specifically, in the illustrated embodiment, the limbs 22, 24 extend from the seat portions 14, 16 both downwardly and in a direction toward the other. As such, in certain embodiments, each of the limbs 22, 24 may provide a cantilever-like feature extending from each of the seat portions 14, 16 to extend in overlapping relation with the other. The first portion 22a, 24a of each limb 22, 24 may be at or near a free end thereof, i.e. an end of the limb 22, 24 furthest from the respective seat portion 14, 16 from which the limb 22, 24 extends. As such, each of the limbs 22, 24 may extend from the respective seat portion 14, 16 in overlapping relation with one another such that the first portion 22a of the limb 22 extending from the first seat portion 14 may be closer to the second seat portion 16 than to the first seat portion 14, and vice versa, i.e. the first portion 24a of the limb 24 extending from the second seat portion 16 is closer to the first seat portion 14 than to the second seat portion 16. The arrangement is best shown in Figures 4 and 5. Moreover, the first portions 22a, 24a may extend between the first and second clamp surfaces 18, 20 in a direction perpendicular to the direction in which the limbs 22, 24 extend toward one another, i.e. the first portion may extend downwardly from the remainder of the limbs 22, 24, whether the limbs 22, 24 extend in overlapping relation with one another or not. However, the limbs 22, 24 may not overlap with one another in all embodiments and, in certain embodiments, each of the limbs 22, 24 may extend from the respective seat portion 14, 16 only downwardly for the first portions 22a, 24a to extend between the first and second clamp surfaces 18, 20.

In certain embodiments, each of the limbs 22, 24 may comprise second portions 22b, 24b, which may also be referred to as second clampable portions, spaced apart from the first portions 22a, 24b. Like the first portions 22a, 24a, the second portions 22b, 24b may extend between the first clamp surface 18 and the second clamp surface 20 such that each is clampable between the clamp surfaces 18, 20 to secure selectively the first and second seat portions 14, 16 in the plurality of positions relative to one another and the body 12. In embodiments in which the limbs 22, 24 extend in overlapping relation with one another, the first portion 22a of the limb 22 extending from the first seat portion 14 may be disposed between the first and second portions 24a, 24b of the limb 24 extending from second seat portion 16, and vice versa, i.e. the first portion 24a of the limb 24 extending from the second seat portion 16 may be disposed between the first and second portions 22a, 22b of the limb 22 extending from first seat portion 14. The arrangement is again best shown in Figures 4 and 5.

Moreover, in certain embodiments in which the limbs 22, 24 extend in overlapping relation with one another, the limb 22 extending from the first seat portion 14 may abut or rest atop the first portion 24a of the limb 24 extending from the second seat portion 16, and vice versa, i.e. the limb 24 extending from the second seat portion 16 may abut or rest atop the first portion 22a of the limb 22 extending from the first seat portion 14. To this end, the first portions 22a, 22b may be enlarged portions, and extend in opposing directions perpendicular to both the direction in which the limbs 22, 24 extend toward one another and the direction in which first portions 22a, 24a extend downwardly between the first and second clamp surfaces 18, 20. For example, as in the illustrated embodiment, the first portion 22a of the limb 22 extending from the first seat portion 14 may extend forwardly, to extend beneath the limb 24 extending from the second seat portion 16. Similarly, the first portion 24a of the limb 24 extending from the second seat portion 16 may extend rearwardly, to extend beneath the limb 22 extending from the first seat portion 16. The second portions 22b, 24b may extend in at least a similar manner as the first portions 22a, 22b. Each of the first portions 22a, 24a, or each of the first portions 22a, 24a and the second portions 22b, 24b, may abut or rest atop the body 12, or a feature attached thereto, such that weight of the cyclist placed upon the seat portions 14, 16 may be transferred from the seat portions 14, 16, to the body 12 via the limbs 22, 24. The limbs 22, 24 may be formed as part of the seat portions 14, 16, i.e. each of the limbs 22, 24 may be integral to the first and second seat portions 14, 16, or may be formed separately and attached or coupled thereto.

At least one of the first and second clamp surfaces 18, 20 is movable relative to the other and the body 12 to effect clamping of the first portions 22a, 24a, or the first portions 22a, 24a and second portions 22b, 24b, therebetween. In the illustrated embodiment, the first clamp surface 18 is movable relative to the second clamp surface 20 and the body 12, and the second clamp surface 20 is immovable, being formed as part of the body 12, i.e. the body 12 comprises the second clamp surface 20. Such an arrangement reduces the total number of components required to construct the saddle 10, as well as the number of movable components. In the illustrated embodiment, the first clamp surface 18 is the forwardmost of the clamp surfaces 18, 20. In other embodiments, the arrangement may be reversed by having the second clamp surface 20, the rearmost of the clamp surfaces 18, 20, being moveable. A single clamp member 30, for example a bolt, may extend through each of first and second clamp surfaces 18, 20 and be configured to draw selectively at least one of the first and second clamp surfaces 18, 20 toward the other to effect clamping of the first portions 22a, 24a, or the first portions 22a, 24a and the second portions 22b, 24b, therebetween, as described in more detail below. It will be understood that in the illustrated embodiment it is the first clamp surface 18 that may be drawn selectively toward the second clamp surface 20.

As shown in the illustrated embodiment, the first clamp surface 18 may be provided by a clamp head 32, which may be a block or plate. The first clamp surface 18 may be a rearmost surface of the clamp head 32, an opposing forwardly facing surface of which may be a first bearing surface 34 against which the clamp member 30 may bear to effect clamping. To this end, the clamp member 30 may comprise a head 36 which bears against the first bearing surface 34. The second clamp surface 20 may be provided by a clamp toe 38, which may be an upwardly extending formation of the body 12. The second clamp surface 20 may be a forwardmost surface of the clamp toe 38, an opposing rearwardly facing surface of which may be a second bearing surface 40 against which the clamp member 30 may also bear to effect clamping. The clamp member 30 may comprise a nut 42 of which bears against the second bearing surface 40. Each of the head 36 and the nut 42 may bear either directly or indirectly against the respective bearing surfaces 34, 40. Indeed, as shown in the illustrated embodiment, the saddle 10 may comprise a biasing member 44 through which the clamp member 30 extends, such that the head 36 bears indirectly on the first bearing surface 34 by way of the biasing member 44. The biasing member 44 may bias at least one of the first and second clamp surfaces 18, 20 toward the other. The biasing member 44 may be a helical compression spring. Moreover, the saddle 10 may comprise a quick-release lever 46 configured to act with the single clamp member 30 for selectively drawing at least one of the first and second clamp surfaces 18, 20 toward the other to effect clamping. To this end, the nut 42 may be a barrel nut housed within the quick-release lever 46, such that the nut 42 bears indirectly on the second bearing surface 40 by way of the quick release lever 46. As will be understood, the quick-release lever 46 may be at least similar to the conventional type used for coupling a wheel to forks of a cycle frame and/or securing a seat post to same, being manually operable without the need for tools.

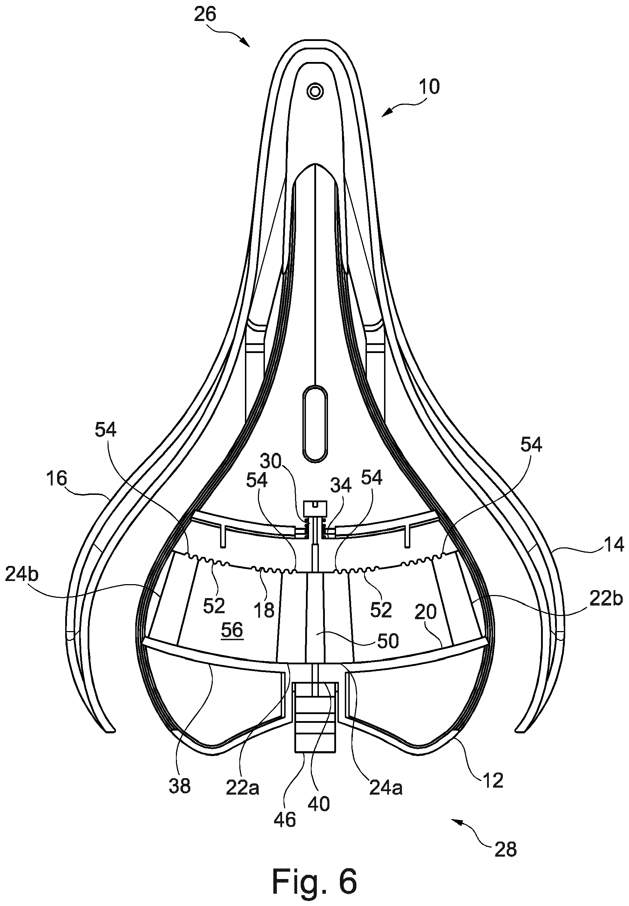

Figure 6 shows the first portions 22a, 24a and the second portions 22b, 24b disposed between the first and second clamp surfaces 18, 20. The clamp member 30 may extend through each of the first and second clamp surfaces 18, 20 and through a void 50 disposed between the first portions 22a, 24a. Accordingly, in the illustrated embodiment, the clamp member 30 extends through the biasing member 44, the clamp head 32 - and thus through the first clamp surface 18 - the void 50, the clamp toe 38 - and thus through the second clamp surface 20, the quick-release lever 46 and the nut 42. Apertures may be provide in the clamp head 32 and the clamp toe 38 for the clamp member 30 to extend through each. Tightening of the clamp member 30 draws at least one of the first and second clamp surfaces 18, 20 toward the other to effect clamping, as the head 36 and the nut 42 bear against the first and second bearing surfaces 34, 40, respectively. Tightening of the clamp member 30 may be effected by rotation of the quick-release lever 46, thus providing a fast and simple way for the cyclist to secure selectively the first and second seat portions 14, 16 in the plurality of positions relative to one another and the body 12. However, in certain embodiments, tightening of the clamp member 30 may be effected by alternative means. For example, tightening of the clamp member 30 may be effected by a spanner and/or a hex key applied to the clamp member 30. In any event, the single pair of opposing clamp surfaces 18, 20, optionally operated by a single clamp member 30, acting to immobilise the both the first and second seat portions 18, 20 may allow personalisation of the saddle 10 to be simple and fast for the cyclist to effect.

Either or both of the first and second clamp surfaces 18, 20 may comprise spaced apart grooves or serrations 52 extending therealong and engageable with the first portions 22a, 24a, or the first portions 22a, 24a and the second portions 22b, 24b. In certain embodiments, the grooves or serrations 52 may facilitate clamping of the first portions 22a, 24a, or the first portions 22a, 24a and the second portions 22b, 24b, between the first and second clamp surfaces 18, 20. For example, the grooves or serrations 52 may become at least partially embedded within the first portions 22a, 24a, or the first portions 22a, 24a and the second portions 22b, 24b. However, in certain embodiments, the grooves or serrations 52 may interlock with one or more complementary surfaces 54 of the first portions 22a, 24a, or the first portions 22a, 24a and the second portions 22b, 24b, complementary to and engageable with the spaced apart grooves or serrations 52. In this manner, the grooves or serrations 52 and the complementary surfaces 54 may, together, define multiple discrete positions making up the plurality of positions of first and second seat portions 14, 16. As such, the first portions 22a, 24a, or the first portions 22a, 24a and the second portions 22b, 24b, may be indexed, i.e. moved between the discrete positions, by moving incrementally the first portions 22a, 24a, or the first portions 22a, 24a and the second portions 22b, 24b, along the first and second clamp surfaces 18, 20, from one discrete position to another between the narrow, or closed, configuration and the wide, or open, configuration. As the biasing member 44 may bias at least one of the first and second clamp surfaces 18, 20 toward the other, the biasing member 44 may urge the grooves or serrations 52 and the complementary surfaces 54 into engagement with one another, prior to tightening of the clamp member 30, which may help the cyclist to locate the first and second seat portions 14, 16 in particular discrete positions when adjusting the width of the saddle 10.

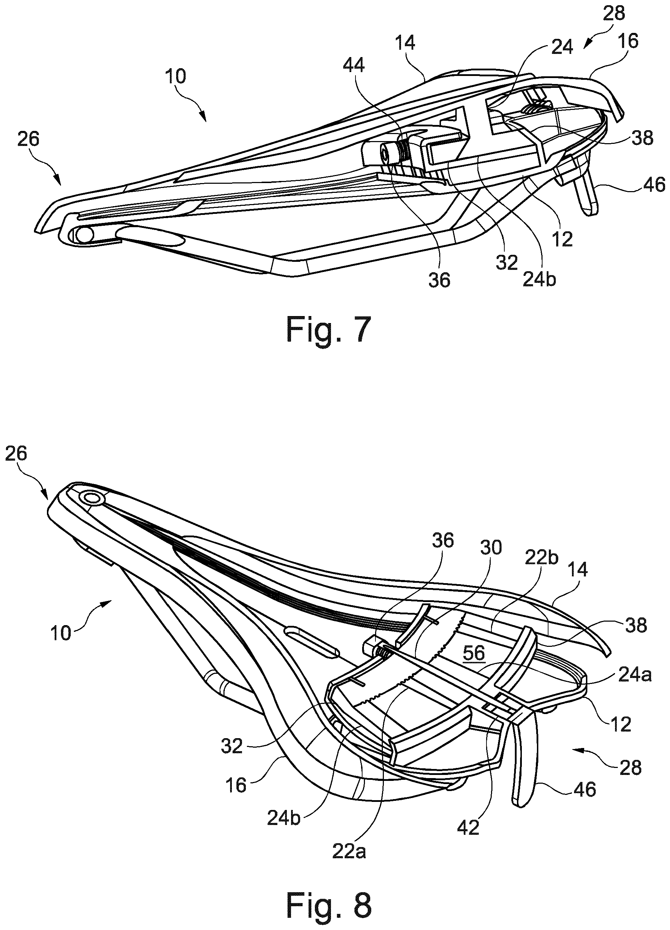

Figures 7 and 8 show how the first and second clamp surfaces 18, 20 may be inclined relative to one another. Moreover, Figures 7 and 8 show that the first portions 22a, 24a, or each of the first portions 22a, 24a and the second portions 22b, 24b, may comprise a geometry complementary to the inclined clamp surfaces 18, 20. As shown in the illustrated embodiment, the geometry of the each of the first portions 22a, 24a, or each of the first portions 22a, 24a and the second portions 22b, 24a, may be at least substantially trapezoidal. The first and second clamp surfaces 18, 20 being inclined may help to improve clamping efficacy, as each of the first portions 22a, 24a, or each of the first portions 22a, 24a and the second portions 22b, 24b, are clamped not only between the clamp surfaces 18, 20, but also effectively between the clamp surfaces 18, 20 and a surface or feature adjacent the clamp surfaces 18, 20. This may help to inhibit rattling and/or undesirable movement of the of the first and second seat portions 14, 16 relative to the body 12, as each of the first portions 22a, 24a, or each of the first portions 22a, 24a and the second portions 22b, 24b, are restrained in at least two translational degrees of freedom. In the illustrated embodiment, the first portions 22a, 24a and the second portions 22b, 24b are urged by the first and second clamp surfaces 18, 20 downwardly toward the body 12, thus effectively clamping the first portions 22a, 24a and the second portions 22b, 24b between the clamp surfaces 18, 20 and the body 12. As shown in the illustrated embodiment, the body 12 may comprise a clamp guide or base 56 upon which the each of the first portions 22a, 24a, or each of the first portions 22a, 24a and the second portions 22b, 24b, may abut or rest atop. More generally, however, each of the first portions 22a, 24a, or each of the first portions 22a, 24a and the second portions 22b, 24b, may abut or rest atop the body 12 and be clampable between the first and second clamp surfaces 18, 20 and the body 12 to secure selectively the first and second seat portions 14, 16 in one of the plurality of positions relative to one another and the body 12.

In certain embodiments, such as the illustrated embodiment, the first and second seat portions 14, 16 may be attached pivotably to the body by a common pivot 58, such a screw. This may require that the first and second clamp surfaces 18, 20 be at least substantially arcuate surfaces, the arcuate surfaces extending in respective circumferential planes at respective radial distances from the common pivot 58. However, the first and second clamp surfaces 18, 20 may be at least substantially arcuate surfaces with or without the common pivot 58. For example, the first and second seat portions 14, 16 may be attached pivotably to the body 12 by a spaced apart respective pivots. Either of the clamp surfaces 18, 20 may be both inclined and arcuate, which may be particularly advantageous, as upon clamping each of the first portions 22a, 24a, or each of the first portions 22a, 24a and the second portions 22b, 24b, are restrained in all three translational degrees of freedom.

To further effect comfort for the cyclist, each of the first and second seat portions 14, 16 may comprise at least one cushioning layer, such as a gel layer. Moreover, the saddle 10 may comprise a resiliently deformable, i.e. elastic, cover layer at least partially covering the first and second seat portions 14, 16 in both of the wide and narrow configurations. The cover layer may cover a gap extending between the first and second seat portions 14, 16.

The invention is not restricted to the details of the illustrated embodiment. For example, attachment of the seat portions 14, 16 to the body 12 may be effected by clamping of the limbs 22, 24 between the clamp surfaces 18, 20 only. Such an arrangement may provide for a 'noseless' embodiment. In certain embodiments, the biasing member 44 may be alternatively provided. The biasing member 44 may be a leaf spring or a block of resilient material. The clamp member 30 need not extend through the first and second clamp surfaces 18, 20 and may instead extend adjacent to them. Embodiments of the saddle 10 may be suitable for road cycling and mountain cycling, amongst other forms of cycling. Features of the saddle 10 may be made from any suitable material, including metal and plastics materials.

The invention extends to any novel one, or any novel combination, of the features disclosed in this specification (including any accompanying claims and drawings). The claims should not be construed to cover merely the foregoing embodiments, but also any embodiments falling within the scope of the claims. Each feature disclosed in this specification (including any accompanying claims and drawings) may be replaced by alternative features serving the same, equivalent or similar purpose, unless expressly stated otherwise. Thus, unless expressly stated otherwise, each feature disclosed is one example only of a generic series of equivalent or similar features. All of the features disclosed in this specification (including any accompanying claims and drawings) may be combined in any combination, except combinations where at least some of such features are mutually exclusive.

## Claims

1. A saddle for a bicycle, the saddle comprising:
a body;
first and second seat portions attached to the body and moveable relative to one another and the body;
first and second clamp surfaces, at least one of the first and second clamp surfaces being movable relative to the other and the body; and
a respective limb extending from each of the first and second seat portions, each of the limbs comprising a first portion extending between the first and second clamp surfaces and being clampable therebetween to secure selectively the first and second seat portions in a plurality of positions relative to one another and the body.

2. A saddle according to claim 1, wherein the limbs extend from the seat portions in overlapping relation with one another such that the first portion of the limb extending from the first seat portion is closer to the second seat portion than to the first seat portion, and vice versa.

3. A saddle according to either of claims 1 and 2, wherein each of the limbs comprises a second portion spaced apart from the first portion extending between the first and second clamp surfaces and clampable therebetween to secure selectively the first and second seat portions in the plurality of positions relative to one another and the body.

4. A saddle according to claim 3, wherein the limbs extend in overlapping relation with one another such that the first portion of the limb extending from the first seat portion is disposed between the first and second portions of the limb extending from second seat portion, and vice versa.

5. A saddle according to any preceding claim, wherein the limb extending from the first seat portion abuts or rests atop the first portion of the limb extending from the second seat portion, and vice versa.

6. A saddle according to any preceding claim, wherein the saddle comprises a single clamp member extending through the first and second clamp surfaces and configured for drawing selectively at least one of the first and second clamp surfaces toward the other to effect clamping of the first portions, or the first portions and the second portions when dependent upon claim 3, therebetween.

7. A saddle according to any preceding claim, wherein at least one of the first and second clamp surfaces comprises spaced apart grooves or serrations extending therealong and engageable with the first portions, or the first portions and the second portions when dependent upon claim 3, and
wherein optionally each of the first portions, or each of the first portions and the second portions when dependent upon claim 3, comprises one or more surfaces complementary to and engageable with the spaced apart grooves or serrations of the at least one of the first and second clamp surfaces.

8. A saddle according to any preceding claim, wherein at least one of the first and second clamp surfaces are inclined relative to one another.

9. A saddle according to claim 8, wherein each of the first portions, or each of the first portions and the second portions when dependent upon claim 3, comprises a geometry complementary to the first and second clamp surfaces, and
wherein optionally the geometry of the each of the first portions, or each of the first portions and the second portions when dependent upon claim 3, is at least substantially trapezoidal.

10. A saddle according to either of claims 8 to 9, wherein each of the first portions, or each of the first portions and the second portions when dependent upon claim 3, abuts or rests atop the body and is clampable between the first and second clamp surfaces and the body to secure selectively the first and second seat portions in the one of the plurality of positions relative to one another and the body.

11. A saddle according to any preceding claim, the saddle comprising a biasing member configured to bias at least one of the first and second clamp surfaces toward the other.

12. A saddle according to any preceding claim, wherein the first and second seat portions are attached pivotably to the body at or near a front end or a nose of the saddle.

13. A saddle according to any preceding claim, wherein the first and second seat portions are attached pivotably to the body by a common pivot.

14. A saddle according to any preceding claim, wherein the first and second clamp surfaces are at least substantially arcuate surfaces.

15. A cycle, such as a bicycle or a tricycle, comprising a saddle according to any preceding claim.
